# EUROPEAN PATENT SPECIFICATION

(11) **EP 0 592 614 B1**
(45) Date of publication and mention of the grant of the patent: **08.01.1997**
(21) Application number: 92923175.1
(22) Date of filing: 20.10.1992
(51) Int. Cl.: B64D 11/06

(54) **DIAMOND SHAPED ARMRESTS FOR AIRLINE PASSENGER SEATS (FUTUREFLITE ARMRESTS)**
DIAMANTFÖRMIGE ARMLEHNE FÜR EINEN FLUGZEUGGASTSITZ
ACCOUDOIRS EN FORME DE LOSANGE POUR SIEGES DE PASSAGERS AERIENS

(30) Priority: 25.02.1992 US 841335
(43) Date of publication of application: 20.04.1994
(73) Proprietor: KANIGOWSKI, Andrew S., D-33014 Bad Driburg (DE)
(72) Inventor: KANIGOWSKI, Andrew S., D-33014 Bad Driburg (DE)
(86) International application number: PCT/US92/08938
(87) International publication number: WO 93/16918

(56) References cited:
- GB-A- 595 685
- US-A- 1 802 620
- US-A- 3 926 473
- US-A- 4 416 488

## Description

### REFERENCE TO RELATED APPLICATIONS

This is an international patent application under the Patent Cooperation Treaty which is based upon the disclosure including the functional and structural description contained in my patent applications Serial No. 07/764,374 filed 23 September 1991 and Serial No. 07/841,335 filed 25 February 1992 in the United States Patent and Trademark Office. The parent utility patent application is now issued as U.S. Patent No. 5,350,217.

### TECHNICAL FIELD

This patent application covers a new and original redesign of shape, for functional reasons, of an article of manufacture. This invention relates to the armrests of the type commonly employed on airline passenger seats.
More particularly, this invention involves the unique shape of armrest side walls in the area of interface between the passenger and the armrest.

### BACKGROUND ART

Airlines use basically three types of passenger seats: Tourist, Business and First Class seats. These seats exist commonly in double or triple seat configuration. Some tourist class seats exist in quad or quint configurations.

Typically, tourist class seats have very narrow armrests and narrow bottom cushions to accommodate a maximum number of passengers in a limited aircraft cabin width, wall-to-wall. Similarly, the same situation exists in most business class seats where armrests and bottom cushions are only slightly wider than in tourist class. Only first class seats offer passengers more comfortable accommodations with wide armrests and wide bottom cushions.

The width of airline seats is dependent on the aircraft type and the required minimum aisle width. Most of the airlines want to pack the maximum number of passengers into a limited cabin cross-section. This results in narrow armrests and narrow seat bottom cushions when available space is divided between the number of passengers sitting closely, side-by-side. In other words, the arithmetic calculation of all armrests, bottom cushions and aisle width dimensions cannot add up to a number larger than the overall dimension of the cabin width.

Airlines typically buy the seats directly from suppliers, not the aircraft makers. Seat designers and manufacturers work to satisfy the airline dimensional limits. In turn, the width of the seat armrests and the width of the seat bottom cushions are often not negotiable and are fixed by the airline and/or aircraft specification. Consequently, overall comfort and appearance of the airline seat is directly related to dimensions imposed on the designer by the airline customer.

Unfortunately, because of this airline industry practice all existing seats look alike when their front views are compared. Most of the seat armrests of the prior art usually have vertical side walls on the sides interfacing with the passenger. Sometimes this wall is concave or removed in the rear hip area to create more room. However, the forward portion of the inboard wall, in the area of passenger knee, is usually flat and vertical on current armrest designs. Typically, a seat back recline adjustment button or Passenger Control Unit (PCU) is installed on this flat vertical wall.

As shown in submitted drawings of the prior art, a typical airline armrest has the appearance of a box in the front view. Forward cross-section of each armrest forms a rectangular shape with vertical sides. A small joggle or bevel (if any), cut for the ornamental reasons, is the only distinguishing feature found on this rectangular section type armrest. Some center armrests in the first or business class seats have bigger cutouts for amenity stowage inside or are supported underneath by a center post forming effectively a T-section. This look can be best described as the rectangular box on a stick. Further examples of this T-armrest can be found in U.S. Patents No. 4,881,702 11/1989 by R. Slettebak or 3,893,729 7/1975 by G. Sherman et al. In case of the Sherman patent, the center armrest is also convertible with a wide top tray being able to plug in place during a conversion to a more comfortable, wider seat. Another example of a convertible/adjustable center armrest can be found in U.S. Patent No. 3,926,473 12/1975 by Hogan. The preambles of claims 1 and 4 are based on this latter document.

Accordingly, the main disadvantage of the prior art is that the armrest looks and feels narrow, especially at the typical 5 cm (2 inch) width on present tourist class seats. While this width may be sufficient on the outboard armrest, it is not enough on the center position where two passengers must share a single armrest located between them. In addition, the vertical side wall is not comfortable when in contact with the curvature of the passenger's leg causing local pressures during long flights. This effect is even worse when legs are pinched above knees by the front/lower corners of armrest.

One more disadvantage is very poor exposure of the seat Passenger Control Unit (PCU) when installed on the vertical armrest wall surfaces. These units face toward legs not toward the eyes of passenger in existing airline seats. The newest solution of this problem is by relocation of the PCU to the top surface of the rectangular armrest in recently introduced new airline seat models. This new top location is at the expense of the ashtray which is removed from this area and may confuse two passengers when a single PCU unit is equally accessible by both of them.

### DISCLOSURE OF INVENTION

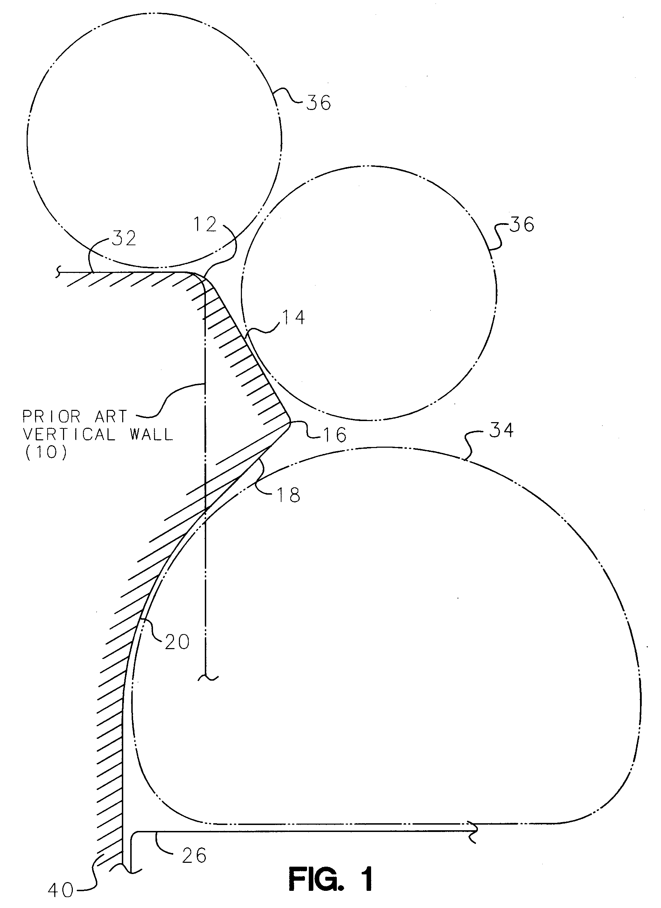

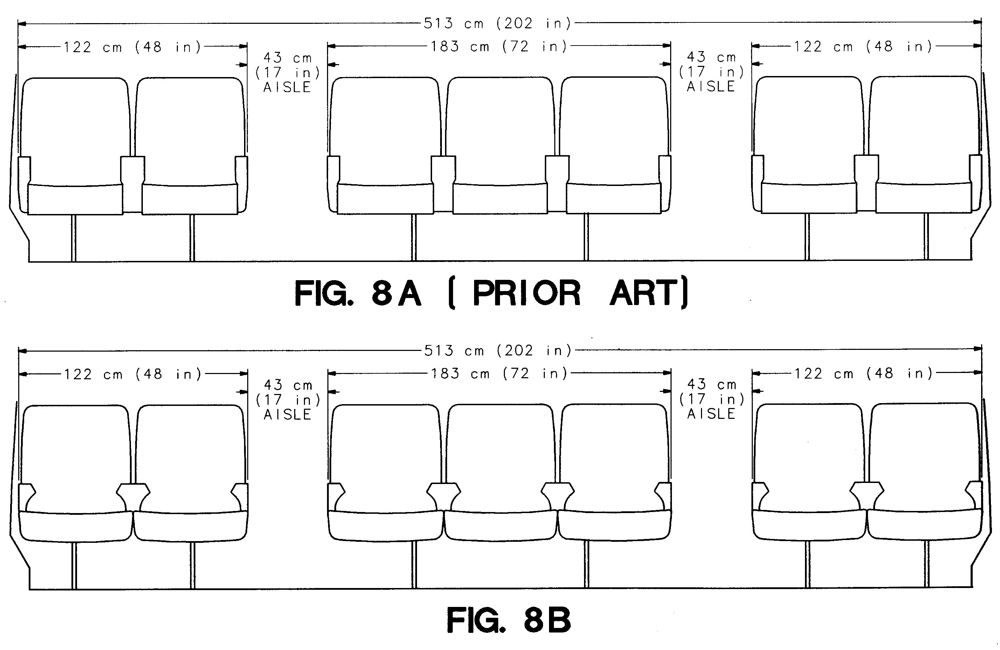

This design innovation is related and directed to the side wall of the armrest. More particularly, it is related to the inboard side wall surfaces of the airline seat armrest in the area of interface between the passenger and the armrest. This design innovation may be used with most armrest internal structures. As shown on submitted drawings, this design innovation changes the existing rectangular cross-section shape to a diamond shape cross-section when vertical inboard walls are modified. Please refer to **Figures 1, 3, 4, 5B, 6B, 7B, 8B** for better understanding of the diamond shape concept.

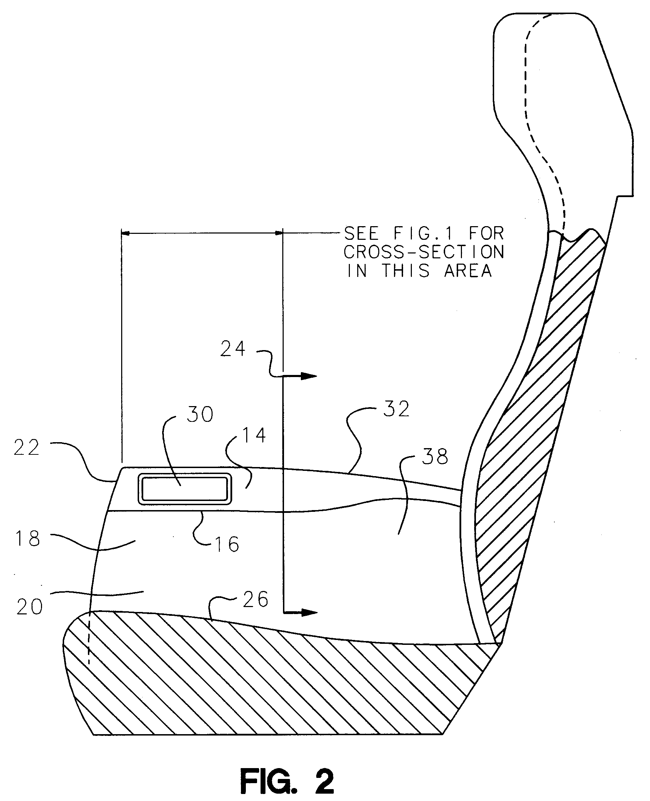

The new shape is accomplished by redesign of the previous flat, vertical inboard wall **10** (Fig.1) in the forward area of armrest between its front end **22** (Fig.2) and midsection **24** of armrest. Starting at the top edge **12** (Fig.1) the new wall is not vertical. Instead, it runs on approximately 45 to 60 degree slope **14** toward center of the passenger leg **34**. The direction then changes at edge **16** into another sloping surface **18** which is generally tangent to passenger leg **34**. After reaching tangent area the new wall enters a smooth cutout curve **20** in the downward direction.

This curved shape **20** follows closely the natural curvature of the passenger leg **34** above knee. For better understanding, the reader may assume the most comfortable position in his/her chair, place palms of hands on the top of legs above knees and then slide hands downward/out. This manual exercise permits to feel the essential curvature of the new armrest shape which is not found in the current airline seats.

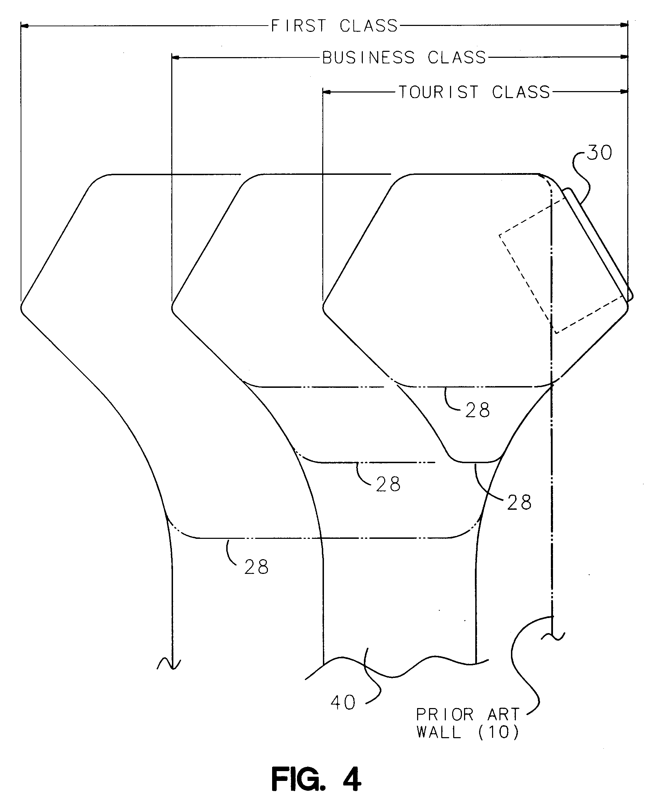

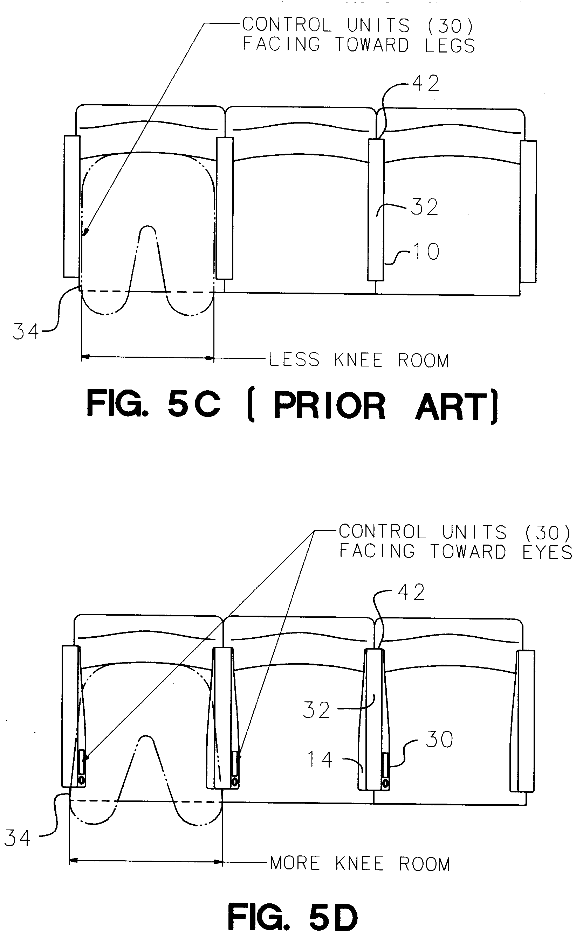

Smoothly curved shape **20** forms a substantial round cutout reaching approximately 2.5 cm (1 inch) behind the original vertical wall **10** of the old flat armrest of previous design. This cutout is also well above the previous small joggles usually found near the seat bottom cushion level **26**. At the point near the top of the seat bottom cushion level **26** (Fig.1, 2, 3) the new wall drops vertically below the cushion. This is in case of armrest with the bottom support structure **40** (one which does not fold-up). In the case of armrest with fold-up capability, having a rear attachment and pivot **42** (Fig.5C, 5D), the new contour may be terminated above the seat cushion at any level **28** as shown on Fig.4.

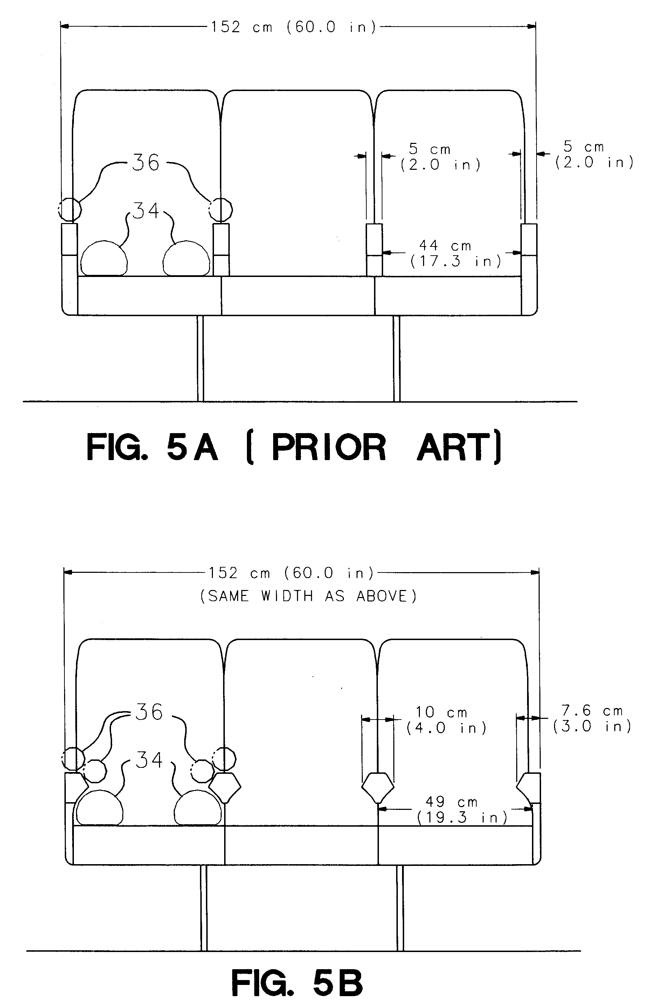

The unique diamond shape of the new design is mainly for functional reasons. The new armrest is accordingly wider at the top and narrower at the bottom, thus allowing wider seat cushions, wider armrests, and upgrading the comfort of seat. The new shape of the armrest side walls provides approximately 5 cm (2 inch) more legroom for each passenger place, measured laterally between armrests at the center of leg level, when compared to previous designs of the rectangular shape. Please compare Figures 5A and 5B, 6A and 6B, 7A and 7B.

Also, the effective width of the new armrest in the upper area is increased by approximately 5 cm (2 inch), with about 2.5 cm (1 inch) per side. That means a 10 cm (4 inch) wide center armrest instead of the previous 5 cm (2 inch) wide armrests on typical tourist class seats. This wider dimension of the armrest is in the forward and center area, not in the rear area where width of the armrest shall be smoothly tapered to clear the hips of the seat occupant.

Please note that the above increases in the width of armrests and seat bottom cushions are accomplished without any change in the overall width of the seat as shown on **Fig.5, 6, 7, 8**. This new armrest shape provides two or three positions for support of the passenger arm **36** as shown on Fig.1 and 5B. The passenger may rest his forearm **36** on the top surface **32** (shared with the adjacent passenger) or on his side of the upper sloping sidewall **14** as shown on submitted drawings. Viewing and operating the PCU controls **30** (Fig.2, 3, 4, 5D, 6D) located on a better exposed slope **14** is also enhanced significantly, compared to the prior art.

### BEST MODE FOR CARRYING OUT THE INVENTION

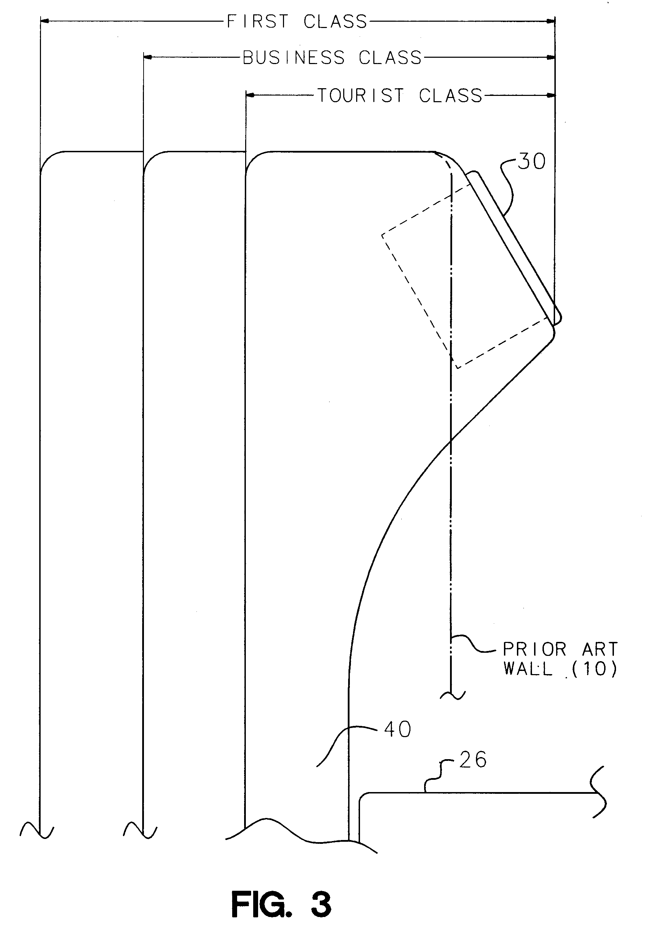

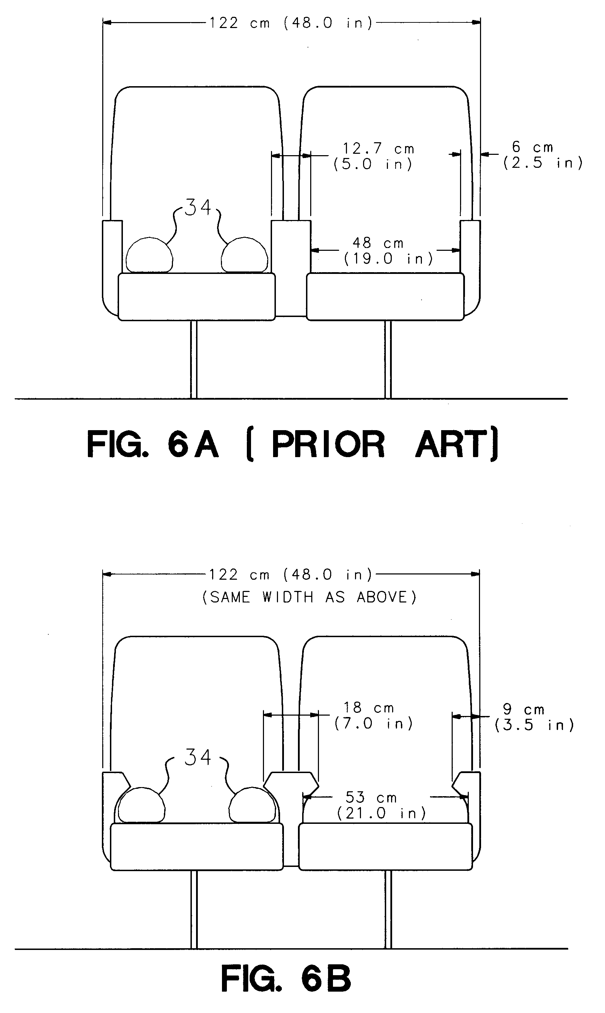

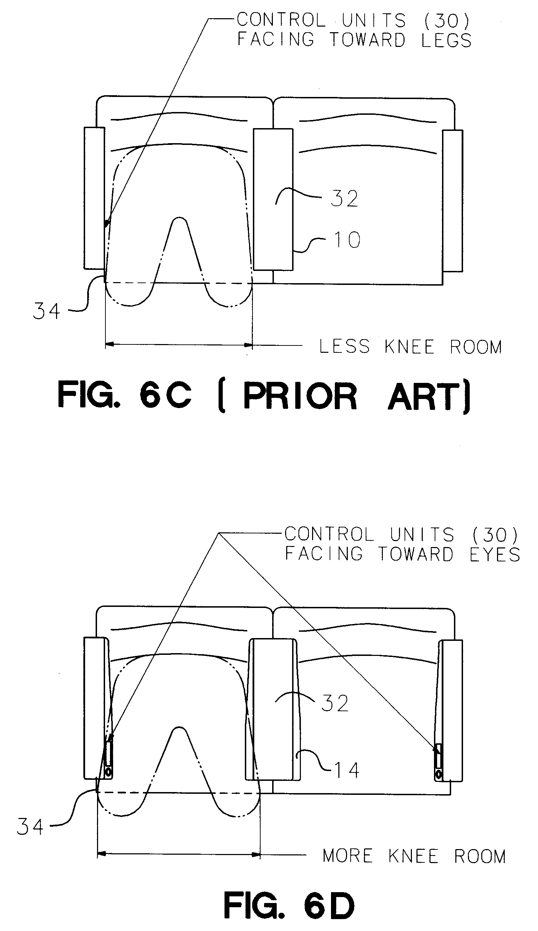

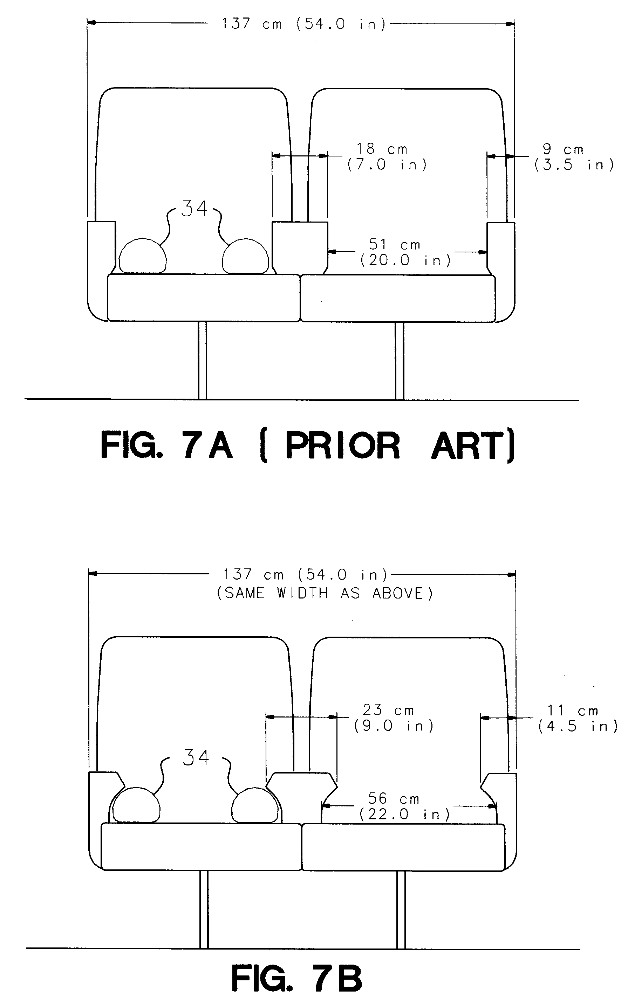

The novel features of the new design are different from the rectangular section of the armrest box which the flying public is accustomed to. The new distinctive design of the diamond shape armrest is intended for application on all airline seats: Tourist **Fig.5B**, Business **Fig.6B**, and First Class passenger seats **Fig.7B**. The only difference will be in the width of armrests as shown on submitted drawings **Fig.3** and **Fig.4**. The new shape is a part of and not removable from the armrest. Changing the shape from a straight vertical wall to a sloping and curved surface produces quite unexpected and surprising results. Each armrest looks and feels wider and the seat bottom cushions look and feel wider too. Thus the comfort of the whole seat is upgraded when compared to the previous seats. The new tourist class seat may feel more like the previous business class seat, and the new business class seat may feel more like the previous first class passenger seat.

The new and unexpected results which flow from this design were not suggested or shown in the prior art of the airline cabin interior field. Please refer to **Fig.5A, 5C, 6A, 6C, 7A, 8A** for a classic look of typical seats in airline service. Based on professional experience in the design of the aircraft seats, it is believed that this invention provides a new usefulness and comfort level that is significantly different from anything heretofore designed. The high degree of novelty is in the fact that a relatively small modification of the armrest side wall surface may generate great new results in the whole seat and in general aircraft cabin comfort.

A typical triple seat has six walls affected by this change generating amplified and unexpected results. Armrests and seat bottom cushions may now feel wider without the necessity of stretching the overall width of the seat. Those ordinarily skilled in this field would rather stretch the width of the seat to achieve the same dimensional and comfort effects. The proof for this statement may be found in both U.S. patents mentioned earlier (US-A-4,881,702 and US-A-3,893,729). Both patents describe a convertible seat capable of being stretched to increase effective dimension between the armrests. One patent even covers a center armrest that may change its width by use of a plug-in tray which is stowed outside as a loose part. Another version of adjustable and stretchable center armrest is the US-A-3,926,473 patent by Hogan, in which the side walls of armrest are moveable and may be hinged and pulled out to create wider center armrest.

Convertible seats would typically deliver a 5 cm (2 inch) width increase between armrests (from 17 to 19 inches) which is exactly the same increase of legroom available with the use of new armrests covered by this patent application. The benefit is in the fact that a complicated "stretch" mechanism is not utilized and the new armrests are also wider on the top, unlike the narrow 5 cm (2 inch) wide armrests in a standard convertible seats.

Another advantage of the new design is in the minimal cost of implementation to achieve all benefits listed above. The new wall shape can be constructed at a similar cost as the previous vertical walls. This was not suggested in the prior patents. This invention provides additional advantages which were not appreciated before. Besides wider cushions and wider legroom comfort, it will also eliminate the disturbing leg-pinching of the seat occupant frequently caused by the previous armrest front corners.

Another significant advantage of the new shape armrest is in a much better exposure of the seat entertainment control units. Such units (known as PCU) are now more conveniently located, easily accessible for operation and viewing, when installed on the upper sloping surface of the new armrest. PCU's were completely hidden from the view and poorly accessible when installed on the prior art vertical walls and facing toward the leg of sitting human. Previous location caused even more pinching of legs and was prone to accidental activation of the control buttons.

The introduction of three arm support surfaces instead of the previous single top rest surface shared by two adjoining passengers shall be also appreciated by all passengers, especially those in the tourist class section. Please compare Fig.5A and 5B, a 5 cm (2 inch) versus 10 cm (4 inch) center armrest.

### BRIEF DESCRIPTION OF DRAWINGS

In the drawings, closely related figures have the same number but have different alphabetic suffixes. Suffixes are mostly used for the purpose of comparison of this invention with the equivalent prior art.
- Fig.1: shows the new contour of the airline seat armrest cross-section in the area between front end and midsection of armrest (preferred embodiment).
- Fig.2: shows side view of inboard wall of the airline seat armrest to indicate location of the new section shown in Fig.1. Side view contour of armrest is not relevant here.
- Fig.3: shows front views and the new contour of the outboard armrest in tourist / business / first class seats (semi-diamond shape of outboard armrests).
- Fig.4: shows front views and new contours of center armrests in tourist / business / first class seats (full diamond shape of center armrests).
- Fig.5A and 5B: show front view of traditional previous art and new armrests installed on typical tourist class seats of identical overall width (comparison).
- Fig.5C and 5D: show the top view of traditional previous art and new armrests installed on typical tourist class triple seats (comparison).
- Fig.6A and 6B: show front view of traditional previous art and new armrests installed on typical business class seats of identical overall width (comparison).
- Fig.6C and 6D: show the top view of traditional previous art and new armrests installed on typical business or first class double seats (comparison).
- Fig.7A and 7B: show front view of traditional previous art and new armrests installed on typical first class seats of identical overall width (comparison).
- Fig.8A and 8B: show airline aircraft cabin sections with front view of passenger seats equipped with a traditional and the new armrests (comparison).

### REFERENCE NUMERALS IN DRAWINGS

- 10: - vertical plane / flat inboard wall of prior art armrest
- 12: - upper edge of armrest
- 14: - upper sloping wall surface in forward area of armrest
- 16: - inboard edge of armrest
- 18: - lower sloping wall surface in forward area of armrest
- 20: - lower cutout / curved side wall surface of armrest
- 22: - armrest front end
- 24: - armrest midsection
- 26: - top of seat bottom cushion level
- 28: - optional termination level of the new contour above seat bottom cushion level
- 30: - Passenger Control Unit (PCU) and/or seat control buttons
- 32: - top support surface of armrest (padded armcap)
- 34: - passenger leg when seated (cross-section)
- 36: - passenger arm on armrest/armcap (cross-section)
- 38: - optional hip area cutout (prior art and present)
- 40: - bottom support structure of armrest (non-folding type)
- 42: - rear attachment / pivot of folding-up type armrest

### INDUSTRIAL APPLICABILITY

A review of current airline cabins shows that the flying public and airline interior designers are clearly accustomed to the rectangular section armrests with vertical side walls on the sides interfacing with the passenger. Existing small bevels or joggles (if any) on the traditional armrest box are for ornamental reasons and well short of the substantial cutout introduced by the new invention contour. Previous corners / edges are positioned in such a way that they only produce uncomfortable pinching on passenger legs. The new upper sloping side walls provide better arm support and better exposure of passenger entertainment control units.

Most of the previous armrests and seat bottom cushions are relatively narrow. This is because airline management is reluctant to provide wider seats with wider armrests as this could reduce revenues by the removal of one passenger from each row of cabin section (at least according to traditional industry practice). Thus the reader will see that the new diamond shaped armrest will help to satisfy the needs of passengers while permitting airline management to retain the same number of seats per cabin section. The unobviousness of this new armrest design is best visible in current airline cabins where present rectangular shape forward section is the basic standard industry-wide.

Although the description above and drawings submitted contain many specifics, these should not be construed as limiting the scope of this invention but as merely providing illustrations of some of the presently preferred embodiments of this innovation. For example, the upper sloping wall may be slightly crowned or on a different angle than shown, and the curved lower cutout near leg may not be formed by a smooth radius as shown. The new contour may be constructed from other shape elements as oval, elliptical, trapezoidal or similar surfaces. Thus the scope of this invention should be determined by the appended claims, rather than by the examples given.

## Claims

1. An armrest assembly adapted for use in an airline aircraft passenger seat, having at least one top surface (32) and side walls, wherein at least one of said side walls is contoured, said armrest assembly comprising at least one upper sloping wall surface (14) starting near an upper edge (12) of said top surface (32), wherein said upper sloping wall surface (14) diverges from a vertical plane (10) and extends outwardly and downwardly toward the passenger's leg (34), at least one lower sloping wall surface (18) positioned below said upper sloping wall, wherein said lower sloping wall (18) extends inwardly and downwardly due to a lower cutout (20), and characterized by:
(a) said upper sloping wall surface (14) housing a seat control button or a passenger control unit (30);
(b) said lower sloping wall surface (18) being integral with said upper sloping wall (14), said cutout having a curvature substantially conforming to the outside shape of the seat occupant's leg (34);
(c) wherein the armrest side wall surfaces form a cross-section resembling a semi-diamond shape when just one side wall is contoured with said upper sloping wall (14) portion and lower sloping wall (18) portion, or a full diamond shape when both side walls are such contoured in a mirror-view fashion, said semi-diamond and full diamond shapes being independent of any adjustable mechanism of variable geometry armrest;
whereby said semi-diamond or full diamond shapes provide a substantially wider armrests measured at the level of an inboard edge (16) than at the level of the upper edge (12), and the upper sloping wall surface (14) providing a convenient, angular exposure of the seat control button or passenger control unit (30).

2. An armrest assembly as recited in claim 1 wherein said upper sloping wall surface (14) extends at about 45 degrees to about 60 degrees slope for approximately 2.5 cm (1 inch) measured horizontally from said vertical plane (10) which originates at the upper edge (12) of armrest.

3. An armrest assembly as recited in claim 1 wherein said lower cutout (20) curves inwardly underneath the upper sloping wall surface (14) and reaches approximately 2.5 cm (1 inch) measured horizontally behind said vertical plane (10) which originates at the upper edge (12) of armrest.

4. An airline passenger's seat armrest having a lower support section including a curved side wall surface (20) merging upwardly and inwardly into an upper section positioned immediately above and comprising a lower wall portion (18) angling toward the passenger above his/her leg (34) to form the underside of an armrest section of broader width on top than in the lower support section, wherein said upper section further includes an inwardly and upwardly extending upper sloping wall surface (14), angling away from the passenger, and another substantially flat surface (32) on top; characterized by the inboard side wall profile being shaped to resemble a semi-diamond shape in cross-section, and
(a) the lower support section being relatively narrow when compared to a well known rectangular section armrest with vertical side walls and constant thickness, wherein the curved side wall surface (20) substantially conforms to a curvature of the interfacing passenger's leg (34) in front end area of armrest (22) and near a seat bottom cushion level (26);
(b) the upper section being substantially semi-diamond shaped whereby such armrest provides:
(c) a narrow lower support section near the seat bottom cushion level (26) which permits increased leg room sideways under said upper semi-diamond section
(d) a smooth transition region to follow the curvature of the outboard side of passenger's leg (34) above knee;
(e) an alternate angular support for passenger's arm (36) on the upper sloping wall surface (14) in addition to the top support surface (32) on top of the armrest.

5. An airline passenger's seat armrest in accordance with claim 4, wherein the opposite side of the armrest is a mirror image of the respective side wall surfaces as recited in claim 4, to form a substantially symmetrical and full diamond shape upper section of broader width on top of the relatively narrow support section, to provide the same features on both sides for two passengers sharing a single armrest between.

6. An airline passenger's seat armrest as recited in claim 4 or claim 5 wherein said lower support section is terminated at any level (28) positioned above the seat bottom cushion level (26) and below said upper semi-diamond or full diamond section, and further including a rear support attachment (42) of armrest to the seat base structure.

7. An airline passenger's seat armrest as recited in claim 4 or 5 or 6, and further including a passenger operated control panel or buttons (30) located on said upper sloping wall surface (14) for easy viewing, convenient access and operation by the passenger.

## Patentansprüche

1. Armlehnenaufbau zur Verwendung bei einem Flugzeug-Passagiersitz mit mindestens einer oberen Fläche (32) und Seitenwänden, wobei mindestens eine der Seitenwände konturiert ist, mit mindestens einer oberen geneigten Wandfläche (14), die an einer oberen Kante (12) der oberen Fläche (32) beginnt, gegenüber einer vertikalen Ebene (10) divergiert und sich nach außen und nach unten zum Bein (34) eines Passagiers hin erstreckt, und mit mindestens einer unterhalb der oberen geneigten Wand befindlichen unteren geneigten Wandfläche (18), wobei sich die untere geneigte Wandfläche (18) aufgrund eines unteren Ausschnitts (20) nach innen und unten erstreckt, **dadurch gekennzeichnet, daß**
(a) die obere geneigte Wandfläche (14) einen Sitzeinstellknopf oder eine Bedieneinheit (30) für Passagiere umfaßt,
(b) die untere geneigte Wandfläche (18) einstückig mit der oberen geneigten Wandfläche (14) ausgebildet ist, wobei der Ausschnitt so gekrümmt ist, daß dieser im wesentlichen der äußeren Beinform (34) des den Passagiersitz benutzenden Passagiers entspricht,
(c) die Armlehnenseitenwandflächen einen Querschnitt bilden, der einer halben Rautenform entspricht, wenn nur eine Seitenwand mit dem oberen geneigten Wandteil (14) und dem unteren geneigten Wandteil (18) ausgebildet ist, oder einen Querschnitt bilden, der vollständig rautenförmig ist, wenn beide Seitenwände spiegelbildlich konturiert sind, wobei die halbe und die vollständige Rautenform unabhängig von einer oder mehreren geometrischen Einstellungen der Armlehnen sind, wobei die halben oder vollständigen Rautenformen, gemessen in Höhe einer Innenkante (16) statt in Höhe der oberen Kante (12), eine im wesentlichen breitere Armlehne schaffen und die obere geneigte Wandfläche (14) eine bequeme, schräg ausgestellte Lage des Sitzeinstellknopfes oder der Passagierbedieneinheit (30) ermöglicht.

2. Armlehnenaufbau nach Anspruch 1, bei der sich die obere geneigte Wandfläche (14) mit einer Neigung von ungefähr 45° bis 60° ca. 2,5 cm (1 Inch), horizontal gemessen von der vertikalen Ebene (10) aus, die an der oberen Kante (12) der Armlehne beginnt, erstreckt.

3. Armlehnenaufbau nach Anspruch 1, bei der sich der untere Ausschnitt (20) unterhalb der oberen geneigten Wandfläche (14) nach innen krümmt und ca. 2,5 cm (1 Inch), horizontal gemessen hinter der vertikalen Ebene (10), die an der oberen Kante (12) der Armstütze beginnt, erreicht.

4. Armlehne für Flugzeugpassagiersitze mit einem unteren Stützabschnitt, der eine gekrümmte Seitenwandfläche (20) umfaßt, die nach oben und innen in einen darüber liegenden oberen Abschnitt übergeht und einen unteren Wandabschnitt (18) aufweist, der sich im Winkel in Richtung zum Passagier über seinem Bein (34) erstreckt, um die Auflage eines oberen Armlehnenabschnittes mit einer größeren Breite als bei dem unteren Stützabschnitt zu bilden, wobei der obere Abschnitt weiterhin eine sich nach innen und oben erstreckende geneigte obere Wandfläche (14), die sich im Winkel von dem Passagier weg erstreckt, sowie eine weitere im wesentlichen flache ebene obere Fläche (32) umfaßt, **dadurch gekennzeichnet, daß** das nach innen gerichtete Seitenwandprofil so geformt ist, daß es im Querschnitt halb rautenförmig ist, und
(a) der untere Stützabschnitt im Vergleich zu einem bekannten rechtwinkligen Armstützenabschnitt mit vertikalen Seitenwänden und gleichbleibender Dicke relativ schmal ist, wobei die gekrümmten Seitenwandflächen (20) im wesentlichen der Krümmung der Grenzfläche des benachbarten Beines (34) des Passagiers im vorderen Endbereich der Armlehne (22) und etwa in Höhe des Sitzpolsters (26) entsprechen;
(b) der obere Abschnitt im wesentlichen halb rautenförmig ist; und die Armstütze
(c) einen schmalen unteren Stützabschnitt etwa in Höhe des Sitzpolsters (26) aufweist, was eine größere Beinfreiheit zur Seite unter dem oberen halb rautenförmigen Abschnitt ermöglicht;
(d) einen gleichmäßigen Übergangsbereich aufweist, um der Krümmung der nach außen gerichteten Seite des Passagierbeins (34) über dem Knie zu folgen; und mit
(e) einer weiteren winkligen Stütze für den Passagierarm (36) auf der oberen geneigten Wandfläche (14) zusätzlich zu der oberen Stützoberfläche (32) oben auf der Armlehne versehen ist.

5. Armlehne für Flugzeugpassagiersitze nach Anspruch 4, dadurch gekennzeichnet, daß die gegenüberliegenden Seitenwandflächen spiegelbildlich entsprechend der in Anspruch 4 beschriebenen Seitenwandfläche ausgebildet sind, um den relativ schmalen oberen Stützabschnitt als einen im wesentlichen symmetrischen und vollständig rautenförmigen oberen Abschnitt mit größerer Breite auszubilden, so daß dieselben Merkmale auf beiden Seiten für zwei Passagiere geschaffen sind, die sich die zwischen ihnen befindliche Armlehne teilen.

6. Armlehne für Flugzeugpassagiersitze nach Anspruch 4 oder 5, dadurch gekennzeichnet, daß der untere Stützabschnitt durch die Höhe (28), die sich zwischen der Höhe (26) des Sitzpolsters und unter dem oberen halb oder vollständig rautenförmigen Querschnitt befindet, begrenzt ist und daß eine an den Sitzgrundrahmen angebrachte rückseitige Armlehnen-Tragbefestigung (42) vorgesehen ist.

7. Armlehne für Flugzeugpassagiersitze nach Anspruch 4 oder 5 oder 6, gekennzeichnet durch eine von einem Passagier bedienbare Schalttafel oder Schaltknöpfe (30), deren Anbringung an der oberen geneigten Wandfläche (14) eine leicht überblickbare, bequem zugängliche Bedienbarkeit ermöglicht.

## Revendications

1. Assemblage d'accoudoir adapté pour être utilisé sur un siège de passager d'un aéronef de ligne aérienne, ayant au moins une surface supérieure (32) et des parois latérales, au moins une desdites parois latérales étant profilée, ledit assemblage d'accoudoir comprenant
(a) au moins une surface de paroi (14) inclinée supérieure partant près d'un bord supérieur (12) de ladite surface supérieure (32), ladite surface de paroi (14) oblique supérieure divergeant d'un plan vertical (10) et s'étendant vers l'extérieur et vers le bas en direction de la jambe (34) du passager, au moins une surface de paroi (18) oblique inférieure placée sous ladite paroi oblique supérieure, ladite paroi (18) oblique inférieure s'étendant vers l'intérieur et vers le bas à cause d'une découpure inférieure (20), et étant caractérisée en ce que:
(a) ladite surface de paroi (14) oblique supérieure reçoit un bouton de commande de siège pour une unité de commande pour passager (30),
(b) ladite surface de paroi (18) oblique inférieure étant une partie intégrale de ladite paroi (14) oblique supérieure, ladite découpure ayant une courbure substantiellement conforme à la forme extérieure de la jambe (34) de l'occupant du siège;
(c) les surfaces de paroi latérales de l'accoudoir forment une section ressemblant à une forme de semi-diamant, quand juste une paroi latérale est profilée conformément à la partie de paroi (14) oblique supérieure et la partie de paroi (18) oblique inférieure, ou à une forme de diamant complet, quand les deux parois latérales sont profilées d'une manière de vue par un miroir, lesdites formes de semi-diamant ou diamant complet étant indépendantes de tout mécanisme ajustable d'un accoudoir à géométrie variable;
les formes de semi-diamant ou diamant complet fournissant ainsi des accoudoirs substantiellement plus large, mesurés au niveau d'un bord intérieur (16) qu'au niveau du bord supérieur (12), et la surface de paroi (14) oblique supérieure fournissant une exposition angulaire convenable du bouton de commande du siège ou de l'unité de commande pour passager (30).

2. Assemblage d'accoudoir selon la revendication 1, dans lequel ladite surface de paroi (14) oblique supérieure s'étend sous environ 45 degrés à environ 60 degrés de pente pour approximativement 2,5 cm (1 pouce) mesuré horizontalement dudit plan vertical (10) qui commence au bord supérieur (12) de l'accoudoir.

3. Assemblage d'accoudoir selon la revendication 1, dans lequel les découpures inférieures (20) tournent vers l'intérieur sous la surface de paroi (14) oblique supérieure et s'étendent sur environ 2,5 cm (1 pouce) mesuré en direction horizontale derrière ledit plan vertical (10), qui part du bord supérieur (12) de l'accoudoir.

4. Accoudoir pour siège de passager de ligne aérienne ayant une partie de support inférieure, comprenant une surface (20) de paroi latérale courbée, se terminant vers le haut et vers l'intérieur dans une partie supérieure placée immédiatement au-dessus et comprenant une partie de paroi inférieure (18) faisant un angle en direction du passager au-dessus de sa jambe (34) pour former la partie inférieure d'une section d'accoudoir de largeur plus grande en haut que dans la partie de support inférieure, ladite partie supérieure comprenant en outre une surface de paroi (14) oblique supérieure s'étendant vers l'intérieur et vers le haut, faisant un angle de sorte à s'éloigner du passager, et une autre surface (32) substantiellement plane, caractérisée en ce que le profil vers l'intérieur de la paroi latérale est formé de sorte à ressembler à une forme de semi-diamant en section et
(a) la section de support inférieure étant relativement étroite, quand comparée à l'accoudoir bien connu à section rectangulaire aux parois latérales d'épaisseur constante, la surface de paroi latérale courbée (20) s'adaptant substantiellement à la courbure de la jambe (34) d'un passager faisant interface dans la zone terminale antérieure de l'accoudoir (22) et près du niveau inférieur d'un coussin de siège (26);
(b) la partie supérieure ayant substantiellement la forme d'un semi-diamant, ledit accoudoir fournissant ainsi:
(c) une section de support inférieur étroite près du niveau (26) inférieur du coussin de siège, qui permet un espace plus grand pour les jambes en direction latérale sous ladite partie supérieure en forme de semi-diamant;
(d) une région de transfert (12) pour suivre la courbure du côté hors bord de la jambe (34) de passager au-dessus du genou;
(e) un support angulaire alternatif pour le bras (36) du passager sur la surface de paroi (14) oblique supérieure en supplément à la surface de support supérieure (32) sur l'accoudoir.

5. Accoudoir pour siège de passager de ligne aérienne en accord avec la revendication 4, dans lequel le côté opposé de l'accoudoir est une image réfléchie des surfaces de paroi latérales respectives mentionnées dans la revendication 4, pour former une partie supérieure substantiellement cylindrique et de forme de diamant complet d'une largeur plus grande en haut de la partie de support relativement étroite, pour réaliser les mêmes caractéristiques sur les deux côtés pour deux passagers partageant un accoudoir unique entre-eux.

6. Accoudoir pour siège de passager de ligne aérienne suivant la revendication 4 ou 5, dans lequel ladite partie de support inférieure se termine à n'importe quel niveau (28) placé au-dessus du niveau inférieur (26) du coussin de siège et en-dessus de ladite partie supérieure de semi-diamant ou diamant complet, et comprenant en outre une fixation (42) arrière de support de l'accoudoir à la structure de base du siège.

7. Accoudoir pour siège de passager de ligne aérienne selon la revendication 4, 5 ou 6, et comprenant en outre un panneau de commande ou des boutons (30) manipulés par le passager se trouvant dans ladite surface de paroi (14) supérieure oblique pour être bien vue, facilement accessible et manipulé par le passager.
